# FASCICULE DE BREVET EUROPEEN

(11) **EP 2 205 837 B1**
(45) Date de publication et mention de la délivrance du brevet: **07.09.2011**
(21) Numéro de dépôt: 08844621.6
(22) Date de dépôt: 21.10.2008
(51) Int. Cl.: F01N 3/20, G07C 5/00

(54) **PROCEDE DE DETERMINATION D'INTERVALLE DE MAINTENANCE POUR VEHICULE AUTOMOBILE**
VERFAHREN ZUR BESTIMMUNG DER WARTUNGSINTERVALLE EINES MOTORFAHRZEUGS
METHOD FOR DETERMINING THE SERVICE INTERVALS FOR A MOTOR VEHICLE

(30) Priorité: 31.10.2007 FR 0758727
(43) Date de publication de la demande: 14.07.2010
(73) Titulaire: Peugeot Citroën Automobiles SA, 78140 Vélizy-Villacoublay (FR)
(72) Inventeur: MAESSE, Pierre-Henri, F-92500 Rueil Malmaison (FR)
(74) Mandataire: Ménès, Catherine
(86) Numéro de dépôt international: PCT/FR2008/051889
(87) Numéro de publication internationale: WO 2009/056720

(56) Documents cités:
- WO-A-2005/054636
- US-A1- 2002 023 433

## Description

La présente invention se situe dans le domaine de la maintenance et de la révision de véhicules automobiles, notamment de ceux munis de systèmes de traitement des gaz d'échappement utilisant un agent injecté dans la ligne d'échappement.

Cette invention est, plus particulièrement, destinée à être mise en oeuvre dans les véhicules automobiles munis d'un système de traitement des oxydes d'azote émis par un moteur diesel, le traitement étant effectué par une réduction catalytique sélective des oxydes d'azote en utilisant un réducteur tel que de l'ammoniac.

Ces systèmes de traitement permettent de traiter les gaz d'échappement de manière à ce que les véhicules respectent les niveaux d'émission légalement tolérés, qui sont de plus en plus bas.

Les systèmes à réduction catalytique sélective, dits SCR, comprennent généralement un catalyseur SCR, siège d'une ou plusieurs réactions chimiques de réduction des oxydes d'azote par l'ammoniac.

La présente invention trouve une application avantageuse dans des véhicules munis de tels systèmes, et dans lesquels l'agent réducteur, tel que l'ammoniac, est stocké dans un réservoir en solution aqueuse, par exemple sous forme d'urée.

A l'heure actuelle, les systèmes SCR sont relativement répandus dans les véhicules diesel poids lourds. Dans ces véhicules, le remplissage du réservoir de réducteur est effectué simultanément au remplissage du réservoir de carburant.

Toutefois, une telle solution est difficile à envisager pour des conducteurs particuliers, peu habitués à manipuler une pluralité de produits nécessaires au bon fonctionnement d'un véhicule. En effet, laisser le remplissage d'un réservoir à la charge d'un utilisateur inexpérimenté risque de conduire à des erreurs de manipulation, par exemple à un remplissage du réservoir de réducteur par un autre produit, tel que du carburant, de l'eau, de l'huile moteur, ou encore du liquide de freins.

Il est connu de la demande internationale WO 2005/054636 un système de purification des gaz d'échappement d'un moteur à combustion interne comportant un dispositif d'injection dans la ligne d'échappement d'un agent réducteur stocké dans un réservoir spécifique. Des moyens de jaugeage permettent d'avertir le conducteur du véhicule de ce que le niveau du réservoir a atteint un niveau bas d'alerte, cette information pouvant de plus être convertie en une indication ou du kilométrage que le véhicule peut encore parcourir compte tenu du volume de réducteur encore disponible, et de la consommation en fonction de paramètres moteurs.

L'invention vise donc à remédier à cet inconvénient en fournissant une solution telle que la quantité d'urée embarquée dans le véhicule soit suffisante pour effectuer une réduction correcte des oxydes d'azote pendant toute la durée de fonctionnement d'un véhicule entre deux séances de maintenance. Il est ainsi possible de limiter la manipulation du réducteur par l'utilisateur du véhicule, puisque le remplissage du réservoir est effectué lors des séances de maintenance du véhicule, et ce remplissage est alors accompli par une personne ayant les connaissances nécessaires pour ne pas commettre d'erreur, par exemple un garagiste.

Une solution simple pour garantir cette quantité suffisante d'agent réducteur consiste en un dimensionnement du réservoir supérieur à la quantité théorique de réducteur nécessaire, de manière à garantir la possibilité de réduire les oxydes d'azote en permanence. Une telle solution, envisageable dans le cas d'un véhicule poids lourd, ne l'est pas dans un véhicule léger, de petite taille, pour lequel la réduction de poids et d'encombrement est un enjeu majeur.

Dans de tels véhicules, les constructeurs souhaitent dimensionner au plus juste la taille des réservoirs d'urée, tout en prévoyant des moyens pour éviter toute pénurie de réducteur lors d'une phase de roulage du véhicule, qui entraînent une impossibilité de traiter les gaz d'échappement, et par la suite un dégagement de gaz toxiques dans l'atmosphère.

A cet effet, la présente invention propose un procédé de détermination d'intervalle de maintenance permettant de prendre en compte la consommation de réducteur lors du fonctionnement du véhicule.

Dans les véhicules actuels, on connaît des procédés de détermination d'intervalle de révision et d'entretien en fonction de conditions d'usure de certains éléments du véhicule. On connaît également des procédés de détermination permettant de moduler les intervalles de maintenance en fonction d'un comportement d'un conducteur au volant. En effet, certains types de conduite, par exemple une conduite comportant de nombreuses accélérations et des phases de roulage à grande vitesse, conduisent à une usure plus rapide des éléments du véhicule, et il est donc nécessaire de les vérifier, voire de les remplacer, plus fréquemment que dans le cas d'une conduite plus régulière.

Toutefois, aucune de ces solutions connues ne tient compte de paramètres ayant trait à un système de dépollution installé dans le véhicule.

L'invention propose ainsi un procédé de détermination d'intervalle de maintenance pour un véhicule automobile équipé d'un système de traitement des gaz d'echappement, selon la revendication 1.

La quantité de réducteur disponible dans le réservoir diminue lors de la mise en oeuvre des réactions chimiques de réduction des oxydes d'azote. Ainsi, dans une réalisation, pour déterminer la quantité d'agent réducteur consommée, on détermine une quantité d'oxydes d'azote émis par le moteur, et on calcule, en fonction des réactions chimiques mises en jeu dans le catalyseur, la quantité d'agent réducteur nécessaire pour réduire ces oxydes d'azote.

Cette détermination de la quantité d'oxydes d'azote émise peut être effectuée, par exemple, soit par le biais d'une mesure, soit en utilisant une cartographie prédéterminée des émissions d'oxydes d'azote en fonction de paramètres de fonctionnement du moteur, par exemple le couple et le régime.

Toutefois, il est parfois difficile d'effectuer une mesure correcte des oxydes d'azote émis par le moteur, et la détermination à l'aide d'une cartographie peut s'avérer imprécise. Pour remédier à ces inconvénients, dans une réalisation, la détermination de la quantité d'agent réducteur consommée est effectuée en comparant un niveau de remplissage d'un réservoir d'agent à l'instant du démarrage avec un niveau de remplissage à l'instant du démarrage précédent.

Pour effectuer cette mesure du niveau de remplissage d'un réservoir d'agent on utilise, par exemple un capteur de type continu.

Il est à noter que la précision de la mesure issue d'un tel capteur dépend fortement de la forme du réservoir. En effet, si celui-ci a une forme plate, c'est à dire une grande surface de base et une petite hauteur, une petite différence de niveau peut correspondre à plusieurs litres de consommation de réducteur.

Il est donc utile, dans certaines réalisations, d'effectuer la détermination en utilisant à la fois une mesure de la quantité d'oxydes d'azote et une mesure du niveau de remplissage du réservoir.

L'information concernant la quantité d'azote consommée permet alors, dans une étape suivante du procédé, de déterminer un facteur de pondération reflétant un comportement du conducteur au volant de son véhicule, ou un type de roulage en fonction de l'environnement de circulation, par exemple en milieu urbain ou en milieu extra-urbain. Un tel facteur de pondération est, par exemple, un chiffre compris entre 0 et 10, à partir duquel on pondère la valeur de la distance parcourue. En effet, un trajet de dix kilomètres comprenant de nombreux freinages et accélérations, soit parce qu'il est effectué en milieu urbain, soit parce que l'utilisateur du véhicule a une conduite nerveuse, provoque une usure du véhicule supérieure à l'usure normale pour une telle distance. En conséquence, la pondération par le facteur de sévérité permet de refléter cette usure plus rapide en augmentant ou diminuant fictivement la distance parcourue, pour obtenir la distance parcourue pondérée.

Cette notion de pondération sera ultérieurement détaillée à l'aide d'exemples.

A partir de la distance parcourue pondérée, on procède à la mise à jour de la distance restant à parcourir. Dans une réalisation du procédé, cette mise à jour consiste à soustraire la valeur de distance parcourue pondérée à la valeur initiale de la distance restant à parcourir.

Cette valeur initiale est, par exemple, la valeur mise à jour au cours de la mise en oeuvre précédente du procédé.

En revanche, lors de la première mise en oeuvre du procédé après une maintenance, la valeur initiale est, par exemple, une valeur fixée par un constructeur du véhicule. Cette valeur peut être fixée en fonction du modèle de véhicule, des paramètres du moteur, ou encore de l'âge du véhicule.

Dans une réalisation avantageuse, un procédé selon l'invention est mis en oeuvre en utilisant un calculateur électronique installé dans le véhicule. Le calculateur électronique utilisé à cet effet peut être un calculateur déjà installé dans le véhicule, pour la gestion de l'ensemble des organes, ou un calculateur spécifique à la mise en oeuvre de ce procédé. Dans ce cas, il est possible d'indure dans le procédé une étape au cours de laquelle on stocke dans une mémoire du calculateur la distance restant à parcourir. Ce stockage en mémoire permet, d'une part, d'utiliser la valeur mise à jour pour les mises en oeuvre ultérieures du procédé et, d'autre part, d'informer le conducteur de la prochaine maintenance à effectuer.

Ainsi, dans une réalisation, le procédé comprend l'étape d'informer le conducteur de la distance restant à parcourir, par exemple par le biais d'un affichage sur le tableau de bord.

La mise à jour, dans la mémoire, de la distance restant à parcourir est, selon les réalisations, effectuée :
- en stockant d'une part la valeur initiale de l'intervalle de maintenance, définie par le constructeur, et d'autre part la valeur cumulée des distances parcourues pondérées ; dans ce cas, la distance restant à parcourir correspond à la soustraction entre ces deux données ; ou
- en stockant uniquement la distance restant à parcourir, et en remplaçant cette valeur, à chaque mise en oeuvre du procédé, par la valeur présente en mémoire auquel on soustrait la distance parcourue pondérée.

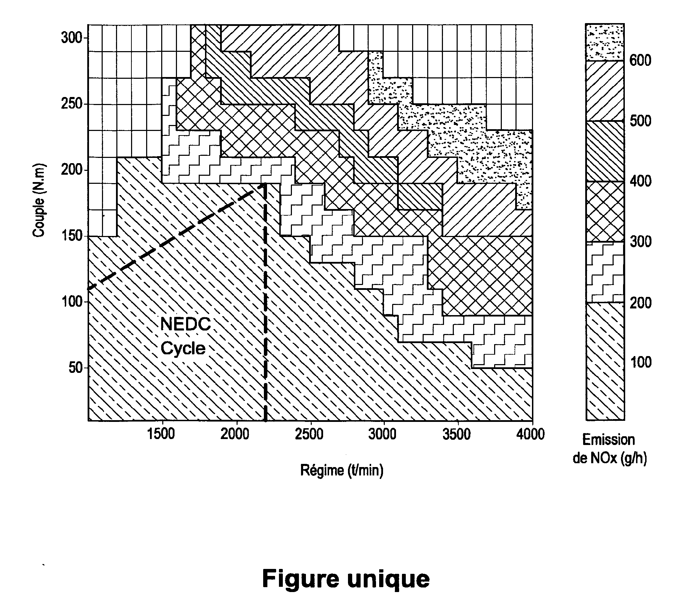

D'autres avantages et caractéristiques de l'invention apparaîtront avec la description de certains de ses modes de réalisation, cette description étant effectuée à titre non limitatif à l'aide des tableaux 1 et II montrés dans la suite de la description, ainsi que de la figure 1 qui montre une cartographique des émissions d'oxydes d'azote dans un moteur, en fonction des paramètres moteur que sont le couple et le régime.

Ainsi, la figure 1 montre, pour chaque paire « couple/régime » envisageable dans un véhicule, la quantité d'oxydes d'azote émise. Le trait pointillé délimite une zone de fonctionnement correspondant à l'évolution des paramètres moteur sur un cycle de fonctionnement normalisé, dit cycle NEDC (New European Driving Cyde). Un cycle NEDC est composé de quatre cycles urbains, dits UDC (Urban Driving Cycle), et d'un cycle extra-urbain, dit EUDC (Extra Urban Driving Cycle).

Dans les véhicules actuels, si la conduite d'un véhicule est telle que les paramètres de fonctionnement sont situés à l'intérieur de la zone délimitée par le trait pointillé, les émissions d'oxydes d'azote par le moteur sont faibles, et la consommation de réducteur l'est également en suivant.

Les intervalles de maintenance sont définis par les conducteurs en fonction des émissions d'oxydes sur des cycles normalisés, par exemple le cycle NEDC.

Or, dès que les paramètres de fonctionnement du véhicule sont situés hors de la zone définie par ce cycle, la consommation de réducteur augmente fortement, ce qui peut conduire à une pénurie de réducteur si l'intervalle de maintenance n'est pas adapté en fonction de cette consommation, et en particulier s'il n'est pas réduit.

En conséquence, dans un procédé conforme à l'invention, on détermine un facteur de sévérité permettant de pondérer la distance parcourue.

Le tableau suivant (Tableau I) montre un exemple d'évolution d'un intervalle de maintenance pour différents type de roulage d'un véhicule :

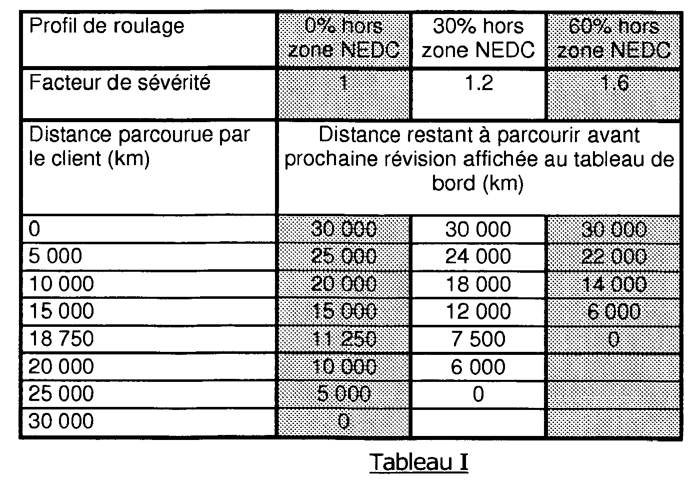

Ce tableau illustre le cas d'un véhicule dont l'intervalle de maintenance de base est fixé à 30 000 kilomètres par le constructeur. Cette valeur de 30 000 kilomètres est la valeur initiale de la distance à parcourir, utilisée lors de la première mise en oeuvre du procédé après une maintenance.

A partir des paramètres moteur, on détermine, grâce à la cartographie de la figure 1, une quantité d'azotes émise ; cette quantité émise permet de déterminer en premier lieu une quantité d'agent réducteur nécessaire pour réduire les oxydes d'azote, et de déterminer par la suite un facteur de sévérité à appliquer à la distance parcourue pour la pondérer.

Le tableau 1 montre ainsi un exemple de valeur moyenne d'un facteur de sévérité pour trois types de comportement de conduite différents.

On constate que, pour un utilisateur ayant un profil de roulage situé entièrement dans la zone pointillée du graphe de la figure 1, dite zone NEDC, l'intervalle de maintenance reste égal à la valeur maximale déterminée par le constructeur, à savoir 30 000 kilomètres.

En revanche, pour un utilisateur ayant une conduite plus brusque, et dont le comportement du moteur est situé hors de la zone NEDC pendant 30% du temps (respectivement 60%), l'intervalle sera revu à la baisse au fur et à mesure des démarrages successifs, jusqu'à atteindre une valeur de 25 000 kilomètres (respectivement 18 750 kilomètres).

Un procédé conforme à l'invention est également illustré à l'aide du tableau II, qui montre de façon détaillée la détermination du facteur de sévérité en fonction de la consommation d'agent réducteur.

**Tableau II**

| | | | | | | Sans stratégie d'adaptation | |
|---|---|---|---|---|---|---|---|
| Distance parcourue | Conso AdBlue | Facteur de sévérité | Distance corrigée | Cumul distance corrigée | Distance restante corrigée | Cumul distance | Distance restante |
| 1 000 | 1 | 1 | 1 000 | 1 000 | 29 000 | 1 000 | 29 000 |
| 500 | 0.8 | 1.6 | 800 | 1 800 | 28 200 | 1 500 | 28 500 |
| 300 | 1.5 | 5 | 1 500 | 3 300 | 26 700 | 1 800 | 28 200 |
| 200 | 2 | 10 | 2 000 | 5 300 | 24 700 | 2 000 | 28 000 |
| 1 000 | 0.9 | 0.9 | 900 | 6200 | 23 800 | 3 000 | 27 000 |

Au cours d'une première phase de roulage, un client parcourt 1000 kilomètres, au cours desquelles il consomme 1 litre d'une solution aqueuse d'urée, par exemple de l'AdBlue.

Cette consommation est alors comparée à la consommation théorique d'AdBlue pour un trajet de cette distance. La consommation théorique est calculée, par exemple, en fonction des émissions théoriques d'azote sur cette distance au cours d'un cycle NEDC. Une autre possibilité pour calculer cette consommation théorique consiste à cumuler les quantités d'injection théorique de réducteur au cours d'un trajet de cette distance.

Lors de cette première phase, la consommation d'AdBlue réellement constatée est égale à la consommation d'AdBlue théorique. En conséquence, le facteur de sévérité, ou facteur de pondération, est déterminé comme étant égal à 1. La distance parcourue pondérée est donc égale à la distance réellement parcourue.

En revanche, au cours de la deuxième phase, une quantité de 0.8 litre d'AdBlue est consommée pour une distance parcourue de seulement 500 kilomètres. Or, la consommation théorique pour cette distance est de 0.5 litre. En conséquence, la quantité d'AdBlue réellement consommée est supérieure à la normale. On détermine alors un facteur de sévérité supérieur à 1, ici égal à 1.6. La distance parcourue pondérée est le résultat de la pondération de la distance réelle, à savoir 500 kilomètres, par le facteur de sévérité, et elle est donc égale à 800 kilomètres.

L'intervalle de maintenance de départ était fixé à 30 000 kilomètres. Dans le cas présent, l'application d'un procédé conforme à l'invention permet de réduire cet intervalle à 28 200 kilomètres, soit un écart de 1800 kilomètres, alors que la distance réellement parcourue est uniquement 1500 kilomètres.

La dernière colonne du tableau II montre les valeurs de l'intervalle de maintenance dans le cas d'un système ne mettant pas en oeuvre le procédé de l'invention.

Au cours des troisième et quatrième phases de roulement, la consommation d'AdBlue est également supérieure à la consommation théorique, et les facteurs de sévérité déterminés sont donc supérieurs à 1.

En revanche, on constate qu'au cours de la dernière phase de roulement, une quantité égale à seulement 0.9 litre d'AdBlue est consommée. Cette quantité est inférieure à la quantité théorique, et le facteur de sévérité est donc déterminé comme étant inférieur à 1.

Ainsi, la distance parcourue pondérée est inférieure à la distance réelle. On constate donc, sur le tableau II, qu'après un parcours de 3000 kilomètres, la distance à parcourir avant la prochaine maintenance a été réduite de 6200 kilomètres, et non pas de 3000 kilomètres, comme c'est le cas dans un système ne mettant pas en oeuvre un procédé d'adaptation des intervalles de maintenance.

Un procédé conforme à l'invention permet donc d'éviter toute mise en défaut d'un système de traitement des gaz d'échappement, en garantissant une quantité suffisante d'agent réducteur pour réduire les oxydes d'azote entre deux maintenances.

Ce procédé est, par ailleurs, relativement aisé à mettre en place dans un véhicule puisqu'il ne nécessite aucune adaptation de pièces, et donc pas de surcoût lors de la fabrication des véhicules.

Un tel procédé est, bien entendu, particulièrement adapté à une mise en oeuvre dans un système de traitement par réduction catalytique sélective, mais il peut être utilisé dans tout autre système embarquant des réservoirs nécessitant un remplissage phasé avec les intervalles de maintenance du véhicule.

## Revendications

1. Procédé de détermination d'intervalle de maintenance pour un véhicule automobile équipé d'un système de traitement des gaz d'échappement, le traitement consistant en une réduction catalytique sélective, dans un catalyseur, des gaz d'échappement par un agent réducteur injecté dans la ligne d'échappement,
le procédé comprenant les étapes suivantes, effectuées lors d'un démarrage du véhicule:
- l'étape de déterminer une valeur initiale de distance restant à parcourir avant la prochaine maintenance,
- l'étape de déterminer une distance parcourue réelle depuis le dernier démarrage,
- l'étape de déterminer une quantité d'agent réducteur consommée depuis le dernier démarrage,
- l'étape de déterminer, en fonction de cette quantité d'agent réducteur consommée, un facteur de sévérité de conduite du véhicule,
- l'étape de corriger la distance parcourue réelle en fonction du facteur de sévérité, afin d'obtenir une distance parcourue pondérée, et
- l'étape de mettre à jour, en fonction de cette distance parcourue pondérée, une valeur mise à jour de la distance restant à parcourir avant la prochaine maintenance, ladite étape de mise à jour consistant à soustraire la valeur de distance parcourue pondérée à la valeur initiale de la distance restant à parcourir, ladite valeur initiale de la distance à parcourir correspondant à la valeur mise à jour au cours de la mise en oeuvre précédente du procédé.

2. Procédé selon la revendication 1, dans lequel la détermination de la quantité d'agent réducteur consommée est effectuée en comparant un niveau de remplissage d'un réservoir d'agent à l'instant du démarrage avec un niveau de remplissage à l'instant du démarrage précédent.

3. Procédé selon la revendication 2, dans lequel la mesure du niveau de remplissage d'un réservoir d'agent est effectuée en utilisant un capteur de type continu.

4. Procédé selon la revendication 1, dans lequel la détermination de la quantité d'agent réducteur consommée est effectuée en déterminant une quantité d'oxydes d'azote émis par le moteur, et en calculant, en fonction des réactions chimiques mises en jeu dans le catalyseur, la quantité d'agent réducteur nécessaire pour réduire ces oxydes d'azote

5. Procédé selon la revendication 4, dans lequel la détermination de la quantité d'oxydes d'azote émise par le moteur est effectuée en utilisant une cartographie prédéterminée des émissions d'oxydes d'azote en fonction de paramètres de fonctionnement du moteur.

6. Procédé selon l'une des revendications précédentes dans lequel, lors de la première mise en oeuvre du procédé après une maintenance, la valeur initiale de la distance à parcourir correspond à une valeur fixée par un constructeur du véhicule.

7. Procédé selon l'une des revendications précédentes comprenant l'étape de stocker, dans une mémoire d'un calculateur installé dans le véhicule, la valeur de la distance restant à parcourir.

8. Procédé selon l'une des revendications précédentes comprenant en outre l'étape d'informer un conducteur du véhicule de la distance restant à parcourir, par exemple par le biais d'un affichage sur le tableau de bord.

## Claims

1. A method for determining a maintenance interval for a motor vehicle equipped with an exhaust gas treatment system, the treatment consisting in a selective catalytic reduction, in a catalytic converter, of the exhaust gases by a reducing agent injected in the exhaust line,
the method comprising the following steps, carried out on starting up the vehicle:
- the step of determining an initial value for the distance still to be covered before the next maintenance,
- the step of determining an actual distance covered since the last start-up,
- the step of determining a quantity of reducing agent consumed since the last start-up,
- the step of determining, as a function of this quantity of consumed reducing agent, a driving severity factor for the vehicle,
- the step of correcting the actual distance covered as a function of the severity factor, so as to obtain a weighted distance covered, and
- the step of updating, as a function of this weighted distance covered, an updated value of the distance still to be covered before the next maintenance, the said updating step consisting in taking the weighted distance covered value from the initial value of the distance still to be covered, the said initial value of the distance to be covered corresponding to the updated value in the course of the preceding implementation of the method.

2. The method according to Claim 1, in which the determining of the quantity of consumed reducing agent is carried out by comparing a filling level of an agent reservoir at the time of start-up with a filling level at the time of the preceding start-up.

3. The method according to Claim 2, in which the measurement of the filling level of an agent reservoir is carried out by using a sensor of the continuous type.

4. The method according to Claim 1, in which the determination of the quantity of consumed reducing agent is carried out by determining a quantity of nitrogen oxides emitted by the engine, and by calculating, as a function of the chemical reactions brought into play in the catalytic converter, the quantity of reducing agent necessary to reduce these nitrogen oxides.

5. The method according to Claim 4, in which the determination of the quantity of nitrogen oxides emitted by the engine is carried out by using a predetermined cartography of the emissions of nitrogen oxides as a function of operating parameters of the engine.

6. The method according to one of the preceding claims in which, on the first implementation of the method after a maintenance, the initial value of the distance to be covered corresponds to a value fixed by a manufacturer of the vehicle.

7. The method according to one of the preceding claims, comprising the step of storing, in a memory of a computer installed in the vehicle, the value of the distance still to be covered.

8. The method according to one of the preceding claims, further comprising the step of informing a driver of the vehicle the distance still to be covered, for example by means of a display on the instrument panel.

## Patentansprüche

1. Verfahren zum Bestimmen eines Wartungsintervalls für ein Kraftfahrzeug, das mit einem System zur Behandlung der Abgase versehen ist, wobei die Behandlung aus einer selektiven katalytischen Reduktion in einem Katalysator der Abgase durch ein Reduziermittel, das in die Auspufflinie eingespritzt wird, besteht,
wobei das Verfahren die folgenden Schritte aufweist, die bei einem Starten des Fahrzeugs ausgeführt werden:
- Schritt des Bestimmens eines Ausgangsentfernungswerts, der vor der nächsten Wartung zurückzulegen ist,
- Schritt des Bestimmens einer seit dem letzten Starten zurückgelegten realen Entfernung,
- Schritt des Bestimmens einer Reduziermittelmenge, die seit dem letzten Starten verbraucht wurde,
- Schritt des Bestimmens in Abhängigkeit von dieser verbrauchten Reduziermittelmenge eines Fahrhärtefaktors des Fahrzeugs,
- Schritt des Korrigierens der realen zurückgelegten Entfernung in Abhängigkeit von dem Härtefaktor, um eine gewichtete zurückgelegte Entfernung zu erzielen und
- Schritt des Aktualisierens in Abhängigkeit von dieser gewichteten zurückgelegten Entfernung eines Aktualisierungswerts der Entfernung, die vor der nächsten Wartung zurückzulegen ist, wobei der Schritt des Aktualisierens darin besteht, den Wert der gewichteten zurückgelegten Entfernung von dem ursprünglichen Wert der noch zurückzulegenden Entfernung abzuziehen, wobei der ursprüngliche Wert der zurückzulegenden Entfernung dem Aktualisierungswert im Laufe der vorhergehenden Umsetzung des Verfahrens entspricht.

2. Verfahren nach Anspruch 1, bei dem das Bestimmen der verbrauchten Reduziermittelmenge durch Vergleichen eines Füllstands eines Mittelbehälters im Augenblick des Startens mit einem Füllstand im Augenblick des vorhergehenden Startens erfolgt.

3. Verfahren nach Anspruch 2, bei dem die Messung des Füllstands eines Mittelbehälters unter Einsatz eines Sensors des kontinuierlichen Typs erfolgt.

4. Verfahren nach Anspruch 1, bei dem das Bestimmen der verbrauchten Reduziermittelmenge durch Bestimmen einer von dem Motor abgegebenen Stickoxidmenge und unter Berechnen der Reduziermittelmenge, die in Abhängigkeit der in dem Katalysator ablaufenden chemischen Reaktionen erforderlich ist, um die Stickoxide zu reduzieren, erfolgt.

5. Verfahren nach Anspruch 4, bei dem das Bestimmen der von dem Motor abgegebenen Stickoxidmenge unter Verwendung einer vorbestimmten Kartografie der Stickoxidemissionen in Abhängigkeit von Betriebsparametern des Motors erfolgt.

6. Verfahren nach einem der vorhergehenden Ansprüche, bei dem bei der ersten Umsetzung des Verfahrens nach einer Wartung der ursprüngliche Wert der zurückzulegenden Entfernung einem von einem Fahrzeughersteller festgelegten Wert entspricht.

7. Verfahren nach einem der vorhergehenden Ansprüche, das den Schritt des Speicherns der noch zurückzulegenden Entfernung in einem Speicher eines in dem Fahrzeug installierten Rechners umfasst.

8. Verfahren nach einem der vorhergehenden Ansprüche, das ferner den Schritt des Informierens eines Fahrers des Fahrzeugs über die noch zurückzulegende Entfernung umfasst, zum Beispiel über eine Anzeige auf dem Armaturenbrett.
